# EUROPÄISCHE PATENTSCHRIFT

(11) **EP 2 273 634 B1**
(45) Veröffentlichungstag und Bekanntmachung des Hinweises auf die Patenterteilung: **17.09.2014**
(21) Anmeldenummer: 10161964.1
(22) Anmeldetag: 05.05.2010
(51) Int. Cl.: H02B 13/065, H02B 13/025, H02B 13/035, H01H 9/30

(54) **Elektrische Schaltanlage, insbesondere Mittelspannungsschaltanlage**
Electric switch assembly, in particular medium voltage medium voltage switching assembly
Installation de commutation électrique, notamment installation de commutation moyenne tension

(30) Priorität: 10.07.2009 DE 102009032539
(43) Veröffentlichungstag der Anmeldung: 12.01.2011
(73) Patentinhaber: Schneider Electric Sachsenwerk GmbH, 93055 Regensburg (DE)
(72) Erfinder: Narin, Güven, 60388 Frankfurt (DE); Zimmerer, Rudolf, 93192 Wald (DE)
(74) Vertreter: DREISS Patentanwälte PartG mbB

(56) Entgegenhaltungen:
- DD-A1- 99 486
- DE-A1-102004 053 613

## Beschreibung

Die Erfindung betrifft eine elektrische Schaltanlage nach dem Oberbegriff des Anspruchs 1.

Eine elektrische Mittelspannungsschaltanlage besteht üblicherweise aus einer Mehrzahl von Schaltfeldern. Die Schaltfelder sind über Sammelschienen elektrisch miteinander verbunden. In den einzelnen Schaltfeldern sind unterschiedliche elektrische Komponenten untergebracht, beispielsweise Leistungsschalter, Trenner/Erder-Schalter und dergleichen. Über diese elektrischen Komponenten werden unter anderem Abzweigungen von den Sammelschienen zu elektrischen Verbrauchern realisiert. Dieser Abgang zu elektrischen Verbrauchern wird üblicherweise mit Hilfe von elektrischen Kabeln realisiert, die im unteren Bereich des Schaltfelds in einem sogenannten Kabelanschlussraum untergebracht sind.

Im Betrieb der elektrischen Schaltanlage ist es möglich, dass im Fehlerfall ein Lichtbogen von einem der Kabel in dem Kabelanschlussraum zum geerdeten Gehäuse des Schaltfelds oder zu einem anderen Kabel entsteht. In einem derartigen Fehlerfall werden sehr hohe Energien umgesetzt, die unter anderem zu einem großen Druckanstieg innerhalb des Schaltfelds und damit zu explosionsartigen Vorgängen führen können. Dies kann Gefährdungen für das Bedienpersonal der Schaltanlage zur Folge haben, die vermieden oder zumindest vermindert werden müssen.

Aus der DE 10 2004 053 613 A1 ist eine Schaltanlage mit einem Gehäuse bekannt, wobei in dem Gehäuse Eingangssammelschienen und Abgangsleiter angeordnet sind, zwischen die wenigstens eine über Antriebsmittel betätigbare Schalteinhalt geschaltet ist. Eine demontierbare Lichtbogenbegrenzung verhindert die auf Spaltung oder Verlängerung eines im Störlichtbogenfall auftretenden Störlichtbogens. Die Lichtbogenbegrenzung wirkt über Ankupplungsmittel mit einem Verriegelungsmechanismus so zusammen, dass der Betrieb der Schaltanlage nur bei montierter Lichtbogenbegrenzung ermöglicht ist.

Aufgabe der Erfindung ist es, einen großen Druckanstieg innerhalb der Schaltanlage zu verhindern.

Die Erfindung löst diese Aufgabe durch eine elektrische Schaltanlage nach dem Anspruch 1.

Die erfindungsgemäße elektrische Schaltanlage ist mit einem Schaltfeld versehen, das ein metallisches Gehäuse aufweist, in dem elektrische Komponenten untergebracht sind, und das einen Kabelanschlussraum aufweist, in dem elektrische Kabel vorhanden sind, wobei die Kabel den Phasen einer elektrischen Energieversorgung zugeordnet sind. Zwischen zwei Kabeln unterschiedlicher Phase ist ein Lichtbogenstabilisator vorhanden, der in einem Bereich angeordnet ist, in dem sich die zugehörigen Kabel innerhalb des Kabelanschlussraums erstrecken. Weiterhin ist der Lichtbogenstabilisator metallisch ausgebildet und ortsfest in dem Gehäuse befestigt.

Weiterhin weist der Lichtbogenstabilisator einen etwa U-förmigen Querschnitt auf. Damit ist jedem der beiden benachbarten Kabel zumindest ein Schenkel des Lichtbogenstabilisators zugewandt, an dem jeweils ein von dem zugehörigen Kabel ausgehender Lichtbogen angreifen kann.

Durch den erfindungsgemäßen Lichtbogenstabilisator soll erreicht werden, dass im Fehlerfall kein Lichtbogen von einem elektrischen Kabel zum Gehäuse oder zu einem anderen Kabel entsteht, sondern dass der Lichtbogen sich nur von dem Kabel zu dem zugehörigen, mit dem Gehäuse verbundenen Lichtbogenstabilisator erstreckt. Dies soll dadurch bewirkt werden, dass der Lichtbogenstabilisator zwischen zwei Kabeln angeordnet und geerdet ist. Damit soll vermieden werden, dass ein Lichtbogen zwischen diesen beiden Kabeln entsteht. Statt dessen soll erreicht werden, dass der Lichtbogen immer auf dem geerdeten Lichtbogenstabilisator endet. Aufgrund der örtlichen Nähe des Lichtbogenstabilisators zu den beiden Kabeln soll weiterhin erreicht werden, dass auch kein Lichtbogen mehr zu dem weiter entfernten Gehäuse entsteht. Es soll also durch die örtliche Nähe des Lichtbogenstabilisators zu den elektrischen Kabeln erreicht werden, dass ein Lichtbogen von dem Lichtbogenstabilisator angezogen wird und sich dann dorthin erstreckt.

Da der von dem Lichtbogen zurückzulegende Weg von einem der beiden Kabel zu dem dazwischen angeordneten Lichtbogenstabilisator wesentlich kürzer ist als zu einem anderen Kabel oder zum Gehäuse, ist die aus dem Lichtbogen resultierende Energie auch wesentlich geringer als bisher. Dies ist aber gleichbedeutend damit, dass auch der Druckanstieg wesentlich geringer ist als bisher, so dass explosionsartige Vorgänge und damit Gefährdungen des Bedienpersonals verhindert oder zumindest vermindert werden.

Besonders vorteilhaft ist es, wenn der Lichtbogenstabilisator länglich ausgebildet und in einem Bereich angeordnet ist, in dem sich die zugehörigen Kabel etwa geradlinig innerhalb des Kabelanschlussraums erstrecken. Damit wird ein Bereich festgelegt, in dem der Lichtbogen entstehen und sich dann erstrecken soll.

Bei einer weiteren vorteilhaften Ausgestaltung der Erfindung bilden vier Lichtbogenstabilisatoren ein gemeinsames Lichtbogenstabilisatorpaket, das vierfach U-förmig ausgebildet ist, wobei die erste und die dritte U-Form dieselbe Richtung aufweisen, während die zweite und die vierte U-Form in die entgegengesetzte Richtung ausgerichtet sind. Ein derartiges Lichtbogenstabilisatorpaket ist besonders einfach herstellbar und kann bei einer Mehrzahl von Kabeln zur Anwendung gebracht werden.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung.

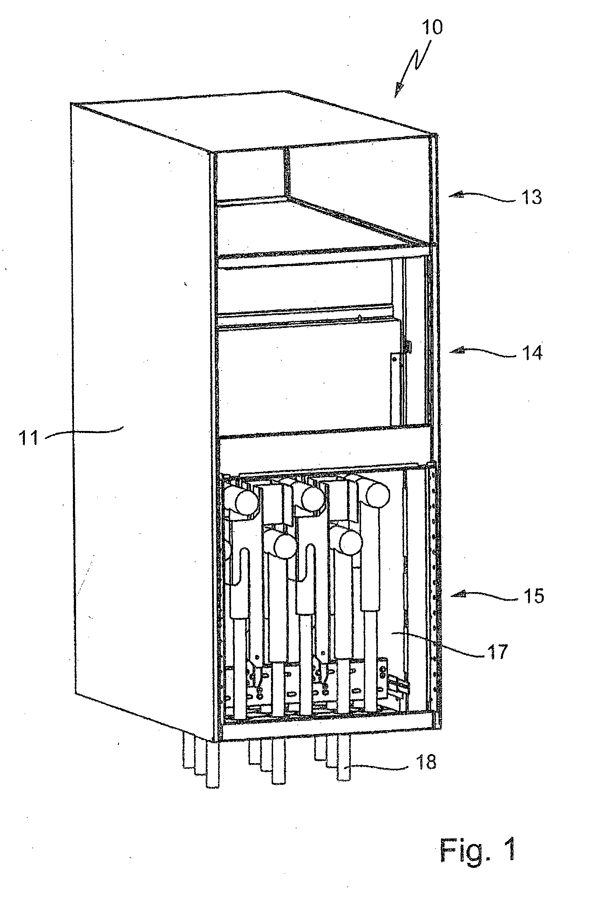

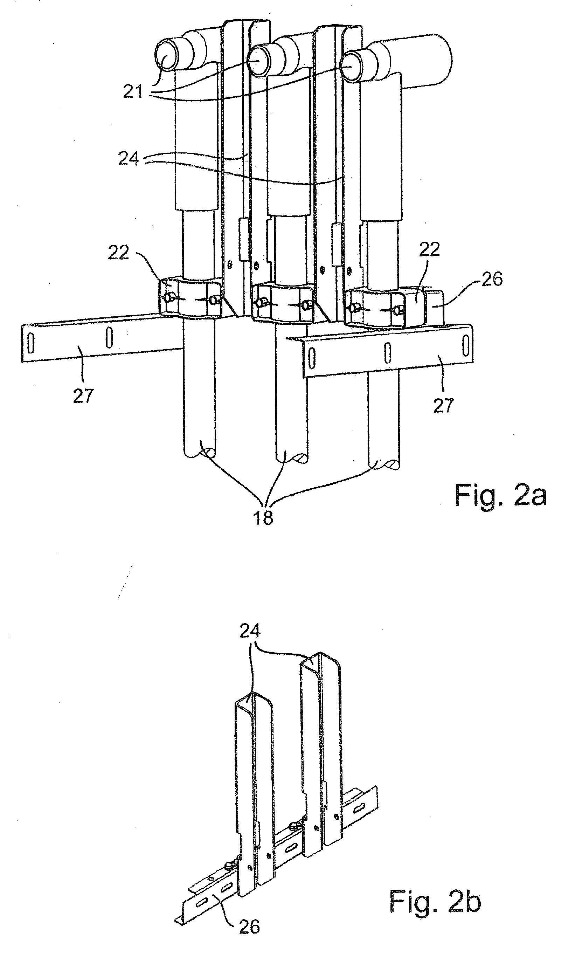

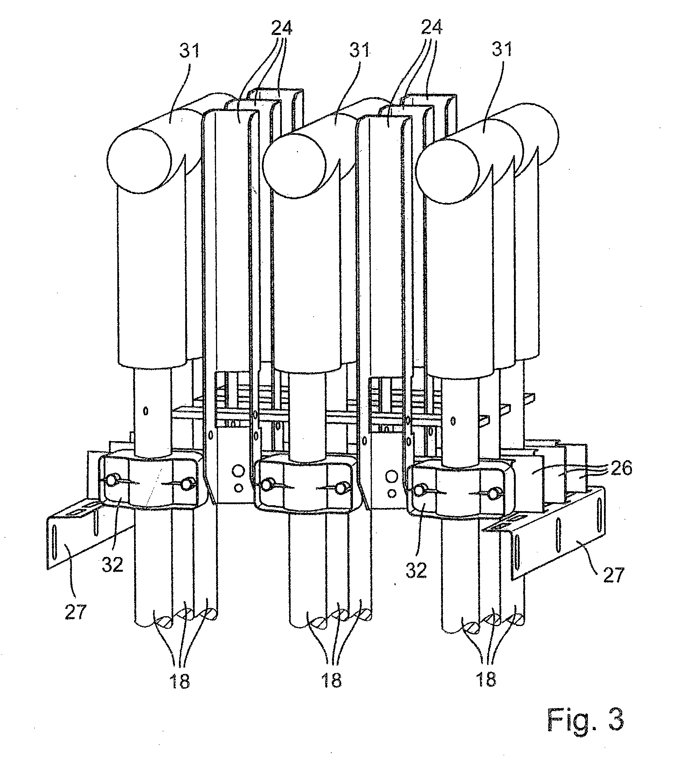

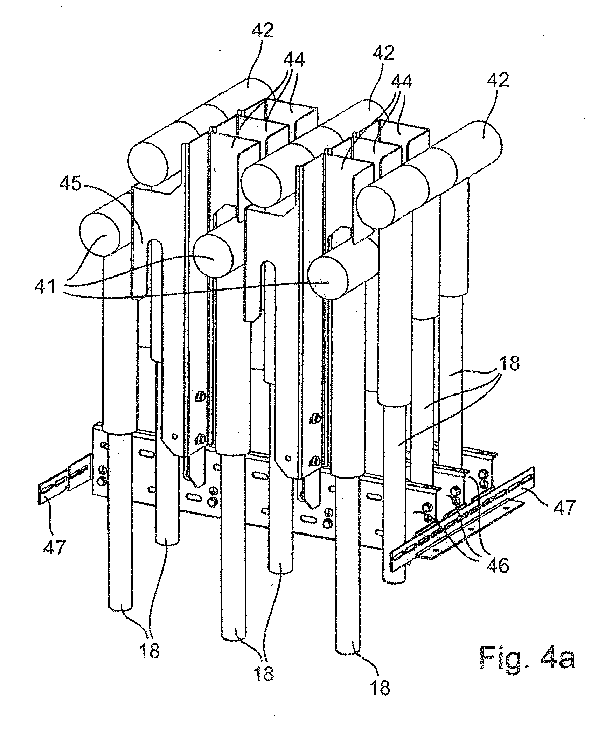

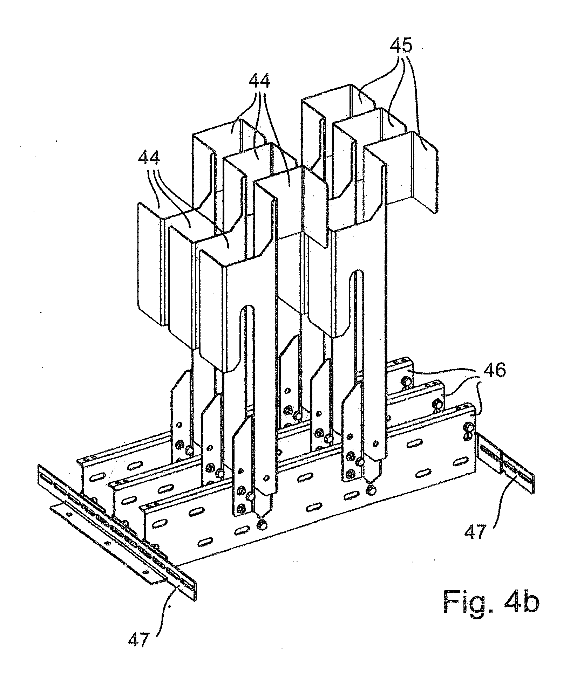

Figur 1 zeigt eine schematische Perspektivansicht eines Ausführungsbeispiels eines erfindungsgemäßen Schaltfelds einer elektrischen Schaltanlage, Figur 2a zeigt einen perspektivischen Ausschnitt aus dem Kabelanschlussraum des Schaltfelds der Figur 1 mit drei elektrischen Kabeln, Figur 2b zeigt eine Perspektivansicht der zwei Lichtbogenstabilisatoren zur Anbringung zwischen den drei elektrischen Kabeln der Figur 2a, Figur 3 zeigt einen perspektivischen Ausschnitt aus dem Kabelanschlussraum des Schaltfelds der Figur 1 mit neun elektrischen Kabeln, Figur 4a zeigt einen perspektivischen Ausschnitt aus dem Kabelanschlussraum des Schaltfelds der Figur 1 mit achtzehn elektrischen Kabeln, und Figur 4b zeigt eine Perspektivansicht der zwölf Lichtbogenstabilisatoren zur Anbringung zwischen den achtzehn elektrischen Kabeln der Figur 4a.

Eine elektrische Schaltanlage, insbesondere eine Mittelspannungsschaltanlage, besteht aus einer Mehrzahl von Schaltfeldern. Die Schaltfelder sind über Sammelschienen elektrisch miteinander verbunden. In den einzelnen Schaltfeldern sind unterschiedliche elektrische Komponenten untergebracht, beispielsweise Leistungsschalter, Trenner/Erder-Schalter und dergleichen. Über diese elektrischen Komponenten werden unter anderem Abzweigungen von den Sammelschienen zu elektrischen Verbrauchern realisiert.

In der Figur 1 ist ein einzelnes Schaltfeld 10 dargestellt, das ein schrankförmiges metallisches Gehäuse 11 aufweist. Das Gehäuse 11 ist in nicht-dargestellter Weise geerdet. Im oberen Bereich 13 des Gehäuses 11 sind die nicht-dargestellten Sammelschienen und in dessen mittlerem Bereich 14 die nicht-dargestellten Leistungsschalter untergebracht. Im unteren Bereich 15 des Gehäuses 11 ist ein Kabelanschlussraum 17 vorhanden, über den der Abgang zu den erwähnten elektrischen Verbrauchern realisiert ist. Dieser Abgang ist mit Hilfe von elektrischen Kabeln 18 ausgeführt, die durch den Kabelanschlussraum 17 nach unten aus dem Schaltfeld 10 herausgeführt sind.

Die in der Figur 1 im Kabelanschlussraum gezeigten Kabel 18 entsprechen dem Ausführungsbeispiel der Figuren 4a, 4b. Es wird hierzu auf die dortigen näheren Erläuterungen verwiesen.

Bei dem Ausführungsbeispiel der Figur 2a sind drei Kabel 18 dargestellt, die in dem Kabelanschlussraum 17 untergebracht und nach unten aus dem Schaltfeld 10 herausgeführt sind. Jedes der drei Kabel 18 gehört zu einer Phase einer dreiphasigen elektrischen Energieversorgung.

Die drei Kabel 18 verlaufen innerhalb des Kabelanschlussraums 17 etwa in vertikaler Richtung von oben nach unten. Zur Verbindung mit den weiteren elektrischen Komponenten des Schaltfelds 10 sind Steckkontakte 21 vorgesehen, die im oberen Bereich des Kabelanschlussraums 17 ortsfest angeordnet sind. Die drei Steckkontakte 21 der Kabel 18 sind etwa in horizontaler Richtung ausgerichtet. Weiterhin sind Kabelschellen 22 vorhanden, mit denen die Kabel 18 innerhalb des Kabelanschlussraums 17 ortsfest gehalten sind.

Zwischen jeweils zwei der drei Kabel 18 ist jeweils ein Lichtbogenstabilisator 24 vorhanden. Die beiden Lichtbogenstabilisatoren 24 befinden sich also immer zwischen unterschiedlichen Phasen der dreiphasigen elektrischen Energieversorgung. Der örtliche Abstand jedes der Lichtbogenstabilisatoren 24 von den benachbarten Kabeln 18 ist dabei kleiner als der örtliche Abstand der Kabel 18 von dem Gehäuse 11 des Schaltfelds 10.

Bei den Lichtbogenstabilisatoren 24 handelt es sich um längliche Metallteile mit einem etwa U-förmigen Querschnitt. Die Lichtbogenstabilisatoren 24 sind mit ihrer Längsrichtung etwa parallel zwischen jeweils zwei Kabel 18 angeordnet. Es ist also ein erster Lichtbogenstabilisator 24 zwischen dem einen äußeren und dem mittleren Kabel 18 und ein zweiter Lichtbogenstabilisator 24 zwischen dem anderen äußeren und dem mittleren Kabel 18 angeordnet. Da die Kabel 18 innerhalb des Kabelanschlussraums 17 etwa vertikal ausgerichtet sind, sind auch die Lichtbogenstabilisatoren 24 etwa in vertikaler Richtung ausgerichtet. Damit ist jedem der drei Kabel 18 zumindest immer ein Schenkel des U-förmigen Querschnitts eines der beiden Lichtbogenstabilisatoren 24 zugewandt.

Die Lichtbogenstabilisatoren 24 sind in einem Bereich vorhanden, in dem sich die Kabel 18 etwa geradlinig innerhalb des Kabelanschlussraums 17 erstrecken. Die Länge der Lichtbogenstabilisatoren 24 ist kleiner als derjenige Bereich, in dem sich die Kabel 18 etwa geradlinig erstrecken.

Die beiden Lichtbogenstabilisatoren 24 sind ortsfest an einem Metallträger 26 befestigt. Der Metallträger 26 ist gemäß der Figur 2a hinter den Kabeln 18 angeordnet und erstreckt sich etwa in horizontaler Richtung und damit quer zu den Kabeln 18. An seinen beiden Enden ist der Metallträger 26 jeweils ortsfest an einer metallischen Halterung 27 befestigt, die ihrerseits in nicht-dargestellter Weise am Gehäuse 11 des Schaltfelds 10 befestigt sind.

In der Figur 2b sind die beiden Lichtbogenstabilisatoren 24 ohne die Kabel 18 dargestellt. Aus der Figur 2b geht die bereits erwähnte U-förmige Ausgestaltung der Lichtbogenstabilisatoren 24 hervor, sowie deren etwa parallele Ausrichtung zueinander. Weiterhin ist ersichtlich, wie die beiden Lichtbogenstabilisatoren 24 an dem Metallträger 26 gehalten sind.

Bei dem Ausführungsbeispiel der Figur 3 sind neun Kabel 18 dargestellt, die in dem Kabelanschlussraum 17 untergebracht und nach unten aus dem Schaltfeld 10 herausgeführt sind. Die neun Kabel 18 setzen sich aus drei Gruppen mit jeweils drei Kabeln 18 zusammen, wobei die drei Kabel 18 einer Gruppe zu den drei Phasen einer elektrischen Energieversorgung gehören und damit jede Gruppe für sich gesehen dem Ausführungsbeispiel der Figur 2a entspricht. Die drei Gruppen mit jeweils drei Kabeln 18 sind gemäß der Figur 3 hintereinander innerhalb des Kabelanschlussraums 17 angeordnet.

Die hintereinander angeordneten Kabel 18 ein- und derselben Phase sind über einen gemeinsamen Steckkontakt 31 miteinander verbunden. Über die drei Steckkontakte 31 sind die neun Kabel 18 damit mit den weiteren elektrischen Komponenten des Schaltfelds 10 verbunden. Weiterhin sind die Kabel 18 mit Hilfe von Kabelschellen 32 ortsfest innerhalb des Kabelanschlussraums 17 gehalten.

Zwischen jeweils zwei der drei Kabel 18 einer Gruppe von Kabeln 18 ist jeweils der bereits anhand der Figuren 2a, 2b erläuterte Lichtbogenstabilisator 24 vorhanden. Die zu einer Gruppe zugehörigen beiden Lichtbogenstabilisatoren 24 befinden sich also immer zwischen unterschiedlichen Phasen der dreiphasigen elektrischen Energieversorgung. Die beiden Lichtbogenstabilisatoren 24 sind in der gleichen Weise zwischen den Kabeln 18 einer Gruppe angeordnet und mit Hilfe des Metallträgers 26 ortsfest befestigt, wie dies für die drei Kabel 18 der Figuren 2a, 2b bereits erläutert wurde.

Im Unterschied zu den Figuren 2a, 2b sind bei der Figur 3 jedoch, wie erwähnt, drei Gruppen von Kabeln 18 vorhanden, so dass die in der Figur 2b dargestellte Anordnung dreifach vorhanden ist. Wie aus der Figur 3 hervorgeht, sind jeweils drei Lichtbogenstabilisatoren 24 hintereinander innerhalb des Kabelanschlussraums 17 angeordnet. In entsprechender Weise sind auch die Metallträger 26 hintereinander angeordnet, um dann über die Halterungen 27 am Gehäuse 11 befestigt zu sein.

Bei dem Ausführungsbeispiel der Figur 4a sind achtzehn Kabel 18 dargestellt, die in dem Kabelanschlussraum 17 untergebracht und nach unten aus dem Schaltfeld 10 herausgeführt sind. Die achtzehn Kabel 18 setzen sich aus zwei Anordnungen mit jeweils drei Gruppen zusammen, wobei jede Gruppe drei Kabel 18 aufweist, und wobei die drei Kabel 18 einer Gruppe zu den drei Phasen einer elektrischen Energieversorgung gehören. Jede der beiden Anordnungen von jeweils drei Gruppen von Kabeln 18 entspricht der in der Figur 3 gezeigten Anordnung von Kabeln 18. In jeder der beiden Anordnungen sind also die drei zugehörigen Gruppen von Kabeln 18 hintereinander in dem Kabelanschlussraum 17 angeordnet.

Die einzelnen Kabel 18 der beiden Anordnungen sind zueinander versetzt angeordnet, und zwar im Hinblick auf den Kabelanschlussraum 17 in horizontaler und in vertikaler Richtung. Die Kabel 18 der beiden Anordnungen sind also seitlich versetzt zueinander und die Kabel 18 der einen Anordnung sind im Vergleich zu den Kabeln 18 der anderen Anordnung nach oben versetzt angeordnet.

Die hintereinander angeordneten Kabel 18 ein- und derselben Phase der beiden Anordnungen von Kabeln 18 sind über jeweils einen gemeinsamen Steckkontakt 41, 42 miteinander verbunden. Über die sechs Steckkontakte 41, 42 sind die achtzehn Kabel 18 damit mit den weiteren elektrischen Komponenten des Schaltfelds 10 verbunden. Weiterhin sind die Kabel 18 mit Hilfe von nicht-dargestellten Kabelschellen ortsfest innerhalb des Kabelanschlussraums 17 gehalten.

Zwischen jeweils zwei der drei Kabel 18 einer Gruppe von Kabeln 18 sind Lichtbogenstabilisatoren 44 vorhanden. Zu einer Gruppe von drei Kabeln 18 gehören also zwei Lichtbogenstabilisatoren 44. Die zu einer Gruppe zugehörigen beiden Lichtbogenstabilisatoren 44 befinden sich also immer zwischen unterschiedlichen Phasen der dreiphasigen elektrischen Energieversorgung. Der örtliche Abstand jedes der Lichtbogenstabilisatoren 44 von den benachbarten Kabeln 18 ist dabei kleiner als der örtliche Abstand der Kabel 18 von dem Gehäuse 11 des Schaltfelds 10.

Die insgesamt vier Lichtbogenstabilisatoren 44 von zwei seitlich und nach oben versetzt angeordneten Gruppen von Kabeln 18 der beiden Anordnungen sind als ein gemeinsames metallisches Lichtbogenstabilisatorpaket 45 ausgebildet. Für die sechs Gruppen von Kabeln 18 der beiden Anordnungen sind somit drei Lichtbogenstabilisatorpakete 45 vorhanden. Die drei Lichtbogenstabilisatorpakete 45 sind hintereinander in dem Kabelanschlussraum 17 untergebracht.

Jedes der Lichtbogenstabilisatorpakete 45 ist vierfach U-förmig ausgebildet, wobei die erste und die dritte U-Form dieselbe Richtung aufweisen, während die zweite und die vierte U-Form in die entgegengesetzte Richtung ausgerichtet sind, und wobei die Schenkel aneinander angrenzender U-Formen ineinander übergehen. Die erste und die dritte U-Form stellen dabei jeweils Lichtbogenstabilisatoren 44 zwischen den Kabeln 18 einer Gruppe der einen Anordnung dar, während die zweite und die vierte U-Form jeweils Lichtbogenstabilisatoren 44 zwischen den Kabeln einer Gruppe der anderen Anordnung repräsentieren. Jedes Lichtbogenstabilisatorpaket 45 enthält damit vier Lichtbogenstabilisatoren 44 für zwei Gruppen von Kabeln 18.

Jedes der Lichtbogenstabilisatorpakete 45 ist ortsfest an einem Metallträger 46 befestigt. Die drei Metallträger 46 sind hintereinander innerhalb des Kabelanschlussraums 17 angeordnet und etwa in horizontaler Richtung und damit etwa quer zu den Kabeln 18 ausgerichtet. An ihren beiden Enden sind die drei Metallträger 46 jeweils ortsfest an metallischen Halterungen 47 gehalten, die ihrerseits am Gehäuse 11 des Schaltfelds 10 befestigt sind.

In der Figur 4b sind die drei Lichtbogenstabilisatorpakete 45 mit den jeweils vier Lichtbogenstabilisatoren 44, aber ohne die Kabel 18 dargestellt. Aus der Figur 4b geht die bereits erwähnte vierfache U-förmige Ausgestaltung der Lichtbogenstabilisatorpakete 45 hervor, sowie deren etwa parallele Ausrichtung zueinander. Weiterhin ist ersichtlich, wie die beiden Lichtbogenstabilisatorpakete 45 an den Metallträgern 46 gehalten und diese an den Halterungen 47 angebracht sind.

Wenn im Fehlerfall ein Lichtbogen von einem der Kabel 18 aus entsteht, so erstreckt sich dieser Lichtbogen immer zu einem der zwischen den Kabeln 18 angeordneten und geerdeten Lichtbogenstabilisatoren 24, 44. Die von dem Lichtbogen erzeugte Energie ist damit im wesentlichen nur abhängig von dem eher kurzen Abstand des jeweiligen Kabels 18 zu dem dazwischen angeordneten Lichtbogenstabilisator 24, 44.

Es versteht sich, dass die erläuterte elektrische Schaltanlage nicht nur im Bereich der Mittelspannungstechnik, sondern auch bei der Nieder- oder Hochspannungstechnik zum Einsatz kommen kann. Weiterhin versteht es sich, dass der erläuterte Kabelanschlussraum der elektrischen Schaltanlage nicht nur im unteren Bereich eines Schaltfelds angeordnet sein kann, sondern auch in anderen Bereichen desselben. Ebenfalls wird darauf hingewiesen, dass nicht nur Steckkontakte zur Verbindung mit weiteren elektrischen Komponenten vorgesehen sein können, sondern auch Schraubkontakte oder Klemmkontakte oder dergleichen.

## Patentansprüche

1. Elektrische Schaltanlage, insbesondere Mittelspannungsschaltanlage, mit einem Schaltfeld (10), das ein metallisches Gehäuse (11) aufweist, in dem elektrische Komponenten untergebracht sind, und das einen Kabelanschlussraum (17) aufweist, in dem elektrische Kabel (18) vorhanden sind, wobei die Kabel (18) den Phasen einer elektrischen Energieversorgung zugeordnet sind, wobei zwischen zwei Kabeln (18) unterschiedlicher Phase ein Lichtbogenstabilisator (24, 44) vorhanden ist, wobei der Lichtbogenstabilisator (24, 44) in einem Bereich angeordnet ist, in dem sich die zugehörigen Kabel (18) innerhalb des Kabelanschlussraums (17) erstrecken, wobei der Lichtbogenstabilisator (24, 44) metallisch ausgebildet ist, **dadurch gekennzeichnet, dass** der Lichtbogenstabilisator ortsfest in dem Gehäuse (11) befestigt ist, dass der Lichtbogenstabilisator (24, 44) einen etwa U-förmigen Querschnitt aufweist, und dass jedem der zwei Kabel (18) ein Schenkel des U-förmigen Querschnitts des Lichtbogenstabilisators (24, 44) zugewandt ist.

2. Elektrische Schaltanlage nach Anspruch 1, wobei der Lichtbogenstabilisator (24, 44) länglich ausgebildet und in einem Bereich angeordnet ist, in dem sich die zugehörigen Kabel (18) etwa geradlinig innerhalb des Kabelanschlussraums (17) erstrecken.

3. Elektrische Schaltanlage nach einem der vorstehenden Ansprüche, wobei bei einer dreiphasigen elektrischen Energieversorgung zwei Lichtbogenstabilisatoren (24, 44) zwischen drei Kabeln (18) vorhanden sind, und wobei die beiden Lichtbogenstabilisatoren (24, 44) ortsfest an einem Metallträger (26, 46) gehalten sind, der ortsfest am Gehäuse (11) befestigt ist.

4. Elektrische Schaltanlage nach Anspruch 3, wobei mehrere Gruppen mit jeweils drei Kabeln (18) hintereinander in dem Kabelanschlussraum (17) angeordnet sind, und wobei jeder Gruppe zwei Lichtbogenstabilisatoren (24, 44) zugeordnet sind.

5. Elektrische Schaltanlage nach Anspruch 4, wobei die Gruppen von Kabeln (18) zwei Anordnungen bilden, wobei die Kabel (18) der beiden Anordnungen zueinander versetzt innerhalb des Kabelanschlussraums (17) angeordnet sind, und wobei vier Lichtbogenstabilisatoren (44), die zu zwei Gruppen unterschiedlicher Anordnungen gehören, ein gemeinsames Lichtbogenstabilisatorpaket (45) bilden.

6. Elektrische Schaltanlage nach Anspruch 5, wobei das Lichtbogenstabilisatorpaket (45) vierfach U-förmig ausgebildet ist, wobei die erste und die dritte U-Form dieselbe Richtung aufweisen, während die zweite und die vierte U-Form in die entgegengesetzte Richtung ausgerichtet sind.

## Claims

1. An electric switch assembly, in particular medium-voltage switch assembly, having a switchboard section (10) which has a metal housing (11) in which electrical components are accommodated and which has a cable connection chamber (17) in which electric cables (18) are present, the cables (18) being assigned to the phases of an electrical power supply, and there is one arc stabilizer (24, 44) between two cables (18) of different phase, and the arc stabilizer (24, 44) is located in a region in which the associated cables (18) extend inside the cable connection chamber (17), and the arc stabilizer (24, 44) is embodied metallically, **characterized in that** the arc stabilizer is secured in stationary fashion in the housing (11); that the arc stabilizer (24, 44) has an approximately U-shaped cross section; and that one leg of the U-shaped cross section of the arc stabilizer (24, 44) faces toward each of the two cables (18).

2. The electric switch assembly of claim 1, wherein the arc stabilizer (24, 44) is embodied in elongated fashion and is located in a region in which the associated cables (18) extend approximately rectilinearly inside the cable connection chamber (17).

3. The electric switch assembly of one of the foregoing claims, wherein in a three-phase electrical power supply, there are two arc stabilizers (24, 44) between three cables (18), and wherein the two arc stabilizers (24, 44) are retained in stationary fashion on a metal bearer (26, 46), which is secured in stationary fashion on the housing (11).

4. The electric switch assembly of claim 3, wherein a plurality of groups, each with three cables (18), are located in succession in the cable connection chamber (17), and wherein two arc stabilizers (24, 44) are assigned to each group.

5. The electric switch assembly of claim 4, wherein the groups of cables (18) form two arrays; wherein the cables (18) of the two arrays are located offset from one another inside the cable connection chamber (17); and wherein four arc stabilizers (44), which belong to two groups of different arrays, form one common arc stabilizer packet (45).

6. The electric switch assembly of claim 5, wherein the arc stabilizer packet (46) is embodied as quadruply U-shaped, and the first and third U shapes are oriented in the same direction, while the second and fourth U shapes are oriented in the opposite direction.

## Revendications

1. Installation de distribution électrique, en particulier installation de distribution moyenne tension, comprenant un panneau de couplage (10) qui présente un boîtier métallique (11) dans lequel sont logés des composants électriques, et qui présente un compartiment de raccordement de câbles (17) dans lequel existent des câbles électriques (18), lesdits câbles (18) étant associés aux phases d'une alimentation en énergie électrique, entre deux câbles (18) de phase différente existant un stabilisateur d'arc électrique (24, 44), ledit stabilisateur d'arc électrique (24, 44) étant disposé dans une zone dans laquelle s'étendent les câbles (18) associés à l'intérieur dudit compartiment de raccordement de câbles (17), le stabilisateur d'arc électrique (24, 44) étant réalisé en métal, et **caractérisée par le fait que** ledit stabilisateur d'arc électrique est fixé à poste fixe dans ledit boîtier (11), que ledit stabilisateur d'arc électrique (24, 44) présente une section transversale à peu près en U et qu'une branche de la section transversale en U du stabilisateur d'arc électrique (24, 44) est tournée vers chacun des deux câbles (18).

2. Installation de distribution électrique selon la revendication 1, dans laquelle ledit stabilisateur d'arc électrique (24, 44) est réalisé de manière oblongue et est disposé dans une zone dans laquelle les câbles (18) associés s'étendent de façon à peu près rectiligne à l'intérieur du compartiment de raccordement de câbles (17).

3. Installation de distribution électrique selon l'une quelconque des revendications précédentes, dans laquelle, dans le cas d'une alimentation en énergie électrique triphasée, deux stabilisateurs d'arc électrique (24, 44) sont présents entre trois câbles (18), et dans laquelle les deux stabilisateurs d'arc électrique (24, 44) sont maintenus à poste fixe sur un support de métal (26, 46) qui est fixé à poste fixe sur ledit boîtier (11).

4. Installation de distribution électrique selon la revendication 3, dans laquelle plusieurs groupes ayant chacun trois câbles (18) sont disposés les uns derrière les autres dans ledit compartiment de raccordement de câbles (17), et dans laquelle deux stabilisateurs d'arc électrique (24, 44) sont associés à chaque groupe.

5. Installation de distribution électrique selon la revendication 4, dans laquelle les groupes de câbles (18) forment deux ensembles, les câbles (18) des deux ensembles étant disposés de manière à être décalés les uns par rapport aux autres à l'intérieur du compartiment de raccordement de câbles (17), et dans laquelle quatre stabilisateurs d'arc électrique (44) qui font partie de deux groupes d'ensembles différents forment un paquet commun de stabilisateurs d'arc électrique (45).

6. Installation de distribution électrique selon la revendication 5, dans laquelle ledit paquet de stabilisateurs d'arc électrique (45) est réalisé quatre fois en U, les première et troisième formes en U présentant la même direction, tandis que les deuxième et quatrième formes en U sont orientées dans le sens opposé.
